# EUROPEAN PATENT SPECIFICATION

(11) **EP 0 683 975 B1**
(45) Date of publication and mention of the grant of the patent: **02.11.2000**
(21) Application number: 95201129.4
(22) Date of filing: 02.05.1995
(51) Int. Cl.: A01J 21/02, A01J 15/12

(54) **Unit for feeding pasty substances, in particular butter, to a metering machine**
Einheit zum Zuführen pastöser Substanzen, insbesondere Butter, zu einer Zuteilmaschine
Unité d'alimentation de substances pâteuses, en particulier du beurre, vers une machine de dosage

(30) Priority: 26.05.1994 IT RE940039
(43) Date of publication of application: 29.11.1995
(73) Proprietor: ING. E. VEZZADINI E C. S.R.L., I-42100 Reggio Emilia (IT)
(72) Inventor: Vezzadini, Eros, I-42100 Reggio Emilia (IT)
(74) Representative: Corradini, Corrado

(56) References cited:
- DD-A- 232 806
- DE-B- 3 020 563

## Description

This invention relates to a unit according to claim 1 for feeding pasty substances, in particular butter, to a metering machine.

To package said food substances, in particular butter, metering machines of positive displacement type have been used for a considerable time, these dividing the substance into discrete quantities of controlled constant volume which are then fed to the packaging machine.

To feed the metering machines it has been known for a long time to use screw devices, each comprising two counter-rotating screws, and fed by an open-top hopper. The hopper is filled periodically in a substantially discontinuous manner, such that the butter level does not fall below a predetermined minimum value.

Although these systems are still used, they have the drawback that the butter is not isolated from the external environment and hence the product is not sufficiently protected against the danger of contamination. In addition these systems use a considerable amount of labour for washing the internal parts which come into contact with the substance.

A further drawback arises from the fact that the action of the screws necessarily results in heating of the substance by friction, this heating not being uniform throughout the treated mass because of the complex and irregular movements which the substance undergoes under the action of the screws, with the result that the packaged product comprises points heated to a greater or lesser extent and hence of different degrees of tenderness, with greater or lesser oxidation (and consequently imperfectly uniform colour).

Plants of more modern design obviating said drawbacks have been in use for some time.

These plants comprise one or more feed pumps which withdraw the butter from a large-capacity vessel and feed it continuously under pressure, via a closed pipe, to one or more metering machines connected in parallel.

Such plants are much appreciated because the food substance is transferred from the vessel to the metering machines by the pipe and the other plant members in a hermetically sealed manner, so that the butter is isolated from the surrounding environment and is hence protected from the danger of contamination by the environment, and because the plant internal surfaces in contact with the substance can be comfortably and effectively washed in a mechanized manner by circulating a suitable liquid through the pipes. An example of these plants is shown in DE-B-30 20 563 wherein a unit for feeding butter to a metering machine is disclosed, comprising a feed pipe for the pressurized substance, which is fed continuously by a feed pump and further comprising a buffer device.

However a technical problem connected with these more modern plants arises by virtue of the fact that the butter travels along the pipe under pressure. In this respect its travel speed is different at the various points of the same cross-section (specifically a minimum in contact with the pipe inner surface and a maximum at its centre), as is the heating which the substance undergoes by friction.

This means that the various constituent fats of the butter tend to separate, with the result that the final pats of butter have an irregular consistency and tend to form flakes which easily separate from each other. This seriously affects the "spreadability" of the substance to the extent that, especially in those regions where butter is frequently used for spreading, such plants are unsuitable because their product is unacceptable to the market.

The present invention is based on the solution that in a plant using a feed pipe for the pressurized substance, which is fed continuously by a feed pump, there is provided a screw feed device having a closed chamber within which there is positioned at least one rotating screw; said chamber is connected upstream to the feed pipe and downstream to the metering machine, the feed device being fed with pressurized substance.

The unit further comprises a chamber for introducing the substance into the feeder device, which is connected in an intermediate position to the feed pipe, and further connected upstream to the compensation chamber of a buffer device and downstream to the chamber of the feeder device

The invention provides all the described advantages of those known plants with pressurized feed via a pipe, ie protection of the substance from the surrounding environment and the facility for mechanized washing.

Because of the mixing which the substance undergoes by the action of the feeder device screws, it is made homogeneous in this device before being fed to the metering machine, to the extent that said drawback relative to the tendency of the butter pats to flake is completely eliminated.

It has also been surprisingly found that the final product obtained has a much more uniform hardness than that obtained with plants of the older type, and in contrast to such plants has a perfectly uniform colour.
Figure 1 is a side view of the unit of the invention.

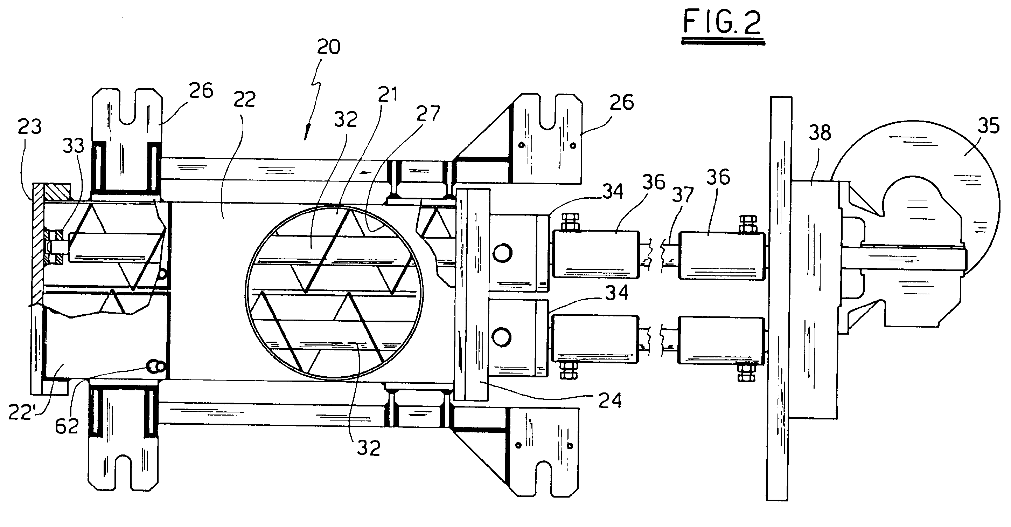

Figure 2 is a view from above of the feeder device of Figure 1.

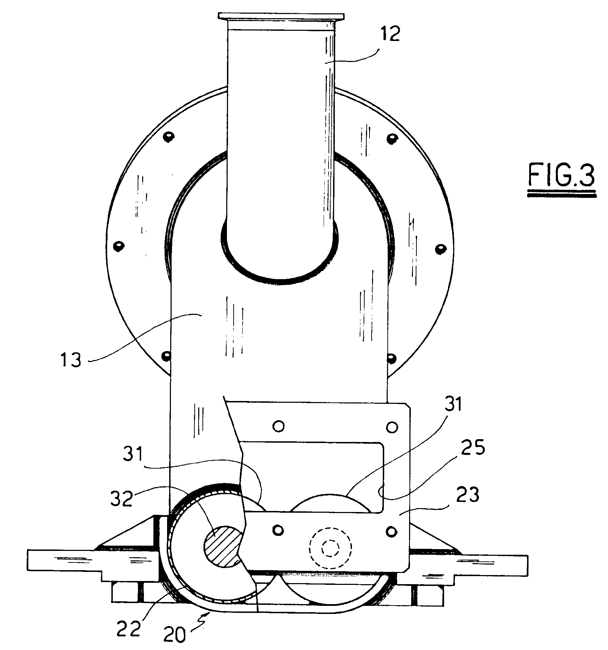

Figure 3 is a view of the feeder device of Figure 1 in the direction of the arrow III.

The unit of the invention comprises a feed pipe 10 for the substance (in particular butter), which is fed continuously by a feed pump 3, for example a positive displacement pump able to provide a throughput of constant but adjustable average value.

The pump 3 is fed via a pipe 4 with food substance originating from a large container 5 containing a large quantity of the substance, and comprising in its base a screw extractor 6.

The pump 3 can feed several units via the same pipe 10 as shown in the figures, for this purpose there being positioned a shutoff valve 7 downstream of the pump 3 in each pipe 11 feeding one unit.

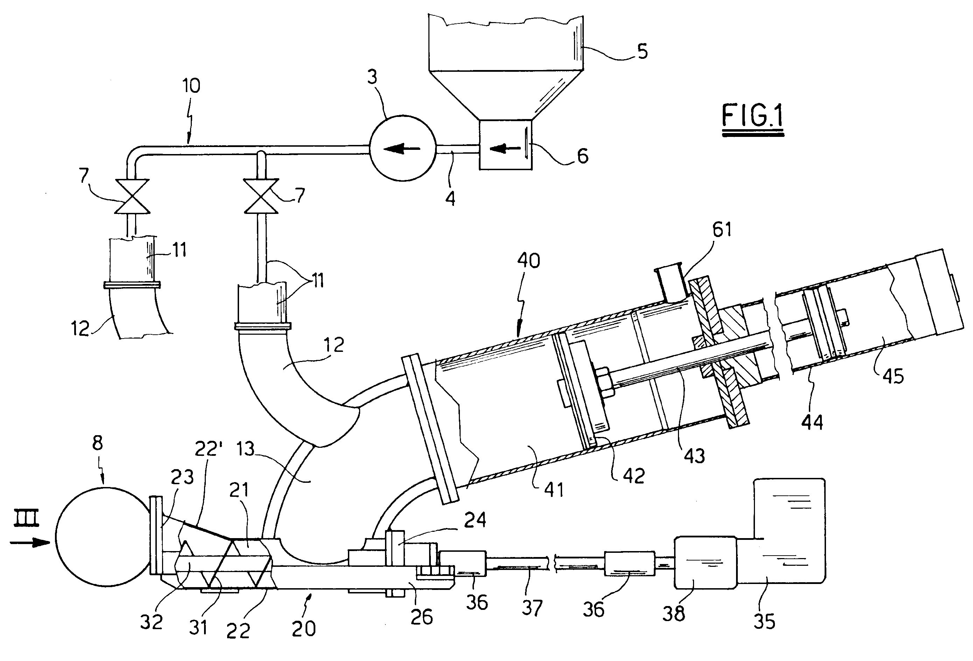

The pipe 10 opens via a curved pipe portion 12 into a substance introduction chamber 13 connected to a screw feeder device 20 which feeds a positive displacement metering machine 8, of known type and shown only schematically in Figure 1.

The feeder device 20 comprises a closed chamber 21 containing one or more rotating screws 31. In particular, two counter-rotating screws 31 with horizontal shafts 32 are provided.

The screws 31 can be of continuous type (as shown in the figures) or of another known type, such as of blade or belt type.

The chamber 21 is defined by a lateral shell 22, a front end wall 23 and a rear end wall 24. The shell 22 is roughly in the shape of two intersecting parallel cylindrical surfaces and encloses the two screws 31 a short distance from them. The downstream upper portion 22' of the shell 22 is flat and inclined upwards in a forward direction to connect to an exit port 25 provided in the front wall 23, to hence form a substance exit region within the chamber 21.

The metering machine 8 is connected to the front wall 23 to be fed via the port 25. Front supports 33 for the shafts 32 are fixed to the wall 23 below the port 25. The rear supports 34 for the shafts 32 are fixed to the rear wall 24. The shafts 32 emerge sealed through the wall 24 and are rotated with equal and opposite rotation by a gear unit 38 driven by a geared motor 35 to which they are connected by couplings 36 and connection shafts 37. Bracket means for fixing the device 20 are indicated by 26. The upstream region of the chamber 21 is connected to the chamber 13 via an entry port 27.

The chamber 13 is of circular cross-section which is substantially constant and greater than the cross-section of the pipe 10. The curved pipe portion 12 opens into it in an intermediate position, the upstream opening of the chamber 13 being connected to the compensation chamber 41 of a buffer device 40 of the cylinder-piston type, in particular formed in accordance with patent application RE92A000061 of 24 July 1992 filed in the name of the present applicant.

Briefly, the buffer device 40 comprises said chamber 41 and a piston 42 sealedly slidable therein and connected by a rod 43 to a single-acting cylinder-piston unit 44 the thrust chamber 45 of which is maintained at a predetermined pressure such as to provide the piston 42 with a thrust of constant value directed in the direction which reduces the volume of the chamber 41. The axis of the chamber 41 is directed downwards and towards the chamber 13, to form a relatively small angle to the horizontal.

The final part of the pipe 10, ie the pipe portion 12, opens into the introduction chamber 13 in a direction having a component towards the compensation chamber 41.

The chamber 13 has a curved axis such that its upstream opening is nearly vertical to join to the chamber 41, its downstream opening being horizontal to join to the port 27 of the device 20.

The entire internal ducting defined by the pipe 10 starting from the pump 3, the chambers 13 and 41 and the chamber 21 of the feeder device 20 is sealed towards the external environment.

In the figures the reference numerals 61 and 62 indicate pipes for circulating a cleaning fluid for the inner surfaces which come into contact with the treated substance.

In operation, the substance (butter) is fed under pressure continuously by the pump 3 along the pipe 10, into the chambers 13 and 41 and then into the chamber 21.

By the thrust action of the screws 31 the substance is then fed through the exit port 25 into the metering machine 8 each time the entry port of this latter is cyclically opened.

Along the described path the pressure of the substance normally varies slightly with time in a differing but uncontrollable manner, in particular because of the flow pattern in the various branches of the pipe 10. Said variations are compensated by the device 40, the chamber 41 of which increases and decreases its volume to balance the pressure of the substance with the pressure within the thrust chamber 45 of the cylinder-piston unit 44. In addition, the flow entering the chamber 13 is directed towards the chamber 41 so as to damp within this chamber any pressure pulsations which the substance may possess and hence reduce their influence within the region of the port 27.

The result is that the substance reaches the entry port 27 at substantially constant pressure.

The screws are rotated at a speed slightly greater than that theoretically necessary for achieving the average throughput required by the metering machine 8, so as to feed the chamber of this machine at an adequate pressure and ensure perfect filling of said chamber in order to achieve exact metering of the substance.

Because of the mixing which the substance undergoes within the chamber 21 by the screws 31, the substance is effectively made homogeneous just before entering the metering machine 8, hence nullifying the separation effect between the various butter components which occurs along the path from the container 5 to the port 27.

The result is that the final packaged product is homogeneous and perfectly spreadable.

Moreover because the substance enters the chamber 21 with regular continuous flow at substantially constant pressure, the heating undergone by the substance due to friction at the screws 31 is distributed in a relatively very uniform manner throughout the entire mass present in the chamber 21. The result is that the final packaged product is of uniform hardness and has none of the colour variation which, because of non-uniform heating with consequent non-uniform oxidation, is present in plants of known type using screw means.

## Claims

1. A unit for feeding pasty substances, in particular butter, to a metering machine, comprising a feed pipe (10) for the pressurized substance, which is fed continuously by a feed pump 3, characterised by comprising: a screw feeder device (20) having a closed chamber (21) within which there is positioned at least one rotating screw (31),
said chamber (21) being connected upstream to the feed pipe (10) and downstream to the metering machine (8),
a chamber (13) for introducing the substance into the feeder device (20), connected in an intermediate position to the feed pipe (10), and further connected upstream to the compensation chamber (41) of a buffer device (40) and downstream to the chamber (21) of the feeder device (20),
said feeder device (20) being fed with pressurized substance.

2. A unit as claimed in claim 1, characterised by that said introduction chamber (13) has a substantially constant cross-section, which is greater than the cross-section of the feed pipe (10).

3. A unit as claimed in claim 1, characterised in that the final portion (12) of the feed pipe (10) opens into the introduction chamber (13) in a direction having a component directed towards the compensation chamber (41).

## Patentansprüche

1. Einheit zum Zuführen pastöser Substanzen, insbesondere Butter, zu einer Zuteilmaschine, die ein Zuleitungsrohr (10) für die druckbeaufschlagte Substanz aufweist, die durch eine Zuführpumpe (3) kontinuierlich gefördert wird,
**dadurch gekennzeichnet,** daß
sie eine Zuführschneckenvorrichtung (20) mit einer geschlossenen Kammer (21) aufweist, innerhalb der mindestens eine sich drehende Schraube (31) angeordnet ist, wobei die Kammer (21) stromaufwärts mit dem Zuleitungsrohr (10) und stromabwärts mit der Zuteilmaschine (8) verbunden ist, und eine Kammer (13) zum Einleiten der Substanz in die Zuführvorrichtung (20), die in einer Zwischenstellung mit dem Zuleitungsrohr (10) und stromaufwärts weiterhin mit der Ausgleichskammer (41) einer Puffervorrichtung (40) und stromabwärts mit der Kammer (21) der Zuführvorrichtung (20) verbunden ist, wobei der Zuführvorrichtung (20) die druckbeaufschlagte Substanz zugeführt wird.

2. Einheit nach Anspruch 1,
**dadurch gekennzeichnet,** daß die Einleitungskammer (13) einen im wesentlichen konstanten Querschnitt aufweist, der größer ist als der Querschnitt des Zuleitungsrohres (10).

3. Einheit nach Anspruch 1,
**dadurch gekennzeichnet,** daß sich der Endbereich (12) des Zuleitungsrohres (10) in einer Richtung in die Einleitungskammer (13) öffnet, wobei ein Bauteil in Richtung der Ausgleichskammer (41) ausgerichtet ist.

## Revendications

1. Unité d'alimentation de substances pâteuses, en particulier du beurre, pour une machine de mesure, comprenant un conduit d'alimentation (10) pour la substance sous pression, qui est approvisionnée de façon continue par une pompe d'approvisionnement 3, caractérisée en ce qu'elle comprend :
un dispositif d'approvisionnement à vis (20) comprenant une chambre fermée (21) à l'intérieur de laquelle est positionnée au moins une vis tournante (31), ladite chambre (21) étant reliée en amont au conduit d'approvisionnement (10) et en aval à la machine de mesure (8),
une chambre (13) pour introduire la substance dans le dispositif d'approvisionnement (20), reliée en une position intermédiaire au conduit d'approvisionnement (10), et en outre reliée en amont à la chambre de compensation (41) d'un dispositif tampon (40) et en aval à la chambre (21) du dispositif d'approvisionnement (20),
ledit dispositif d'approvisionnement (20) étant approvisionné au moyen de la substance sous pression.

2. Unité selon la revendication 1, caractérisée en ce que ladite chambre d'introduction (13) a une section transversale essentiellement constante, qui est plus grande que la section transversale du conduit d'approvisionnement (10).

3. Unité selon la revendication 1, caractérisée en ce que la partie finale (12) du conduit d'approvisionnement (10) s'ouvre dans la chambre d'introduction (13) dans une direction ayant une composante dirigée vers la chambre de compensation (41).
